# EUROPÄISCHE PATENTSCHRIFT

(11) **EP 1 495 511 B1**
(45) Veröffentlichungstag und Bekanntmachung des Hinweises auf die Patenterteilung: **02.11.2006**
(21) Anmeldenummer: 03718632.7
(22) Anmeldetag: 26.03.2003
(51) Int. Cl.: H01M 10/50, H01M 8/04

(54) **ENERGIESPEICHERMODUL**
ENERGY STORAGE MODULE
MODULE DE STOCKAGE D'ENERGIE

(30) Priorität: 30.03.2002 DE 10214367; 15.06.2002 DE 10226847
(43) Veröffentlichungstag der Anmeldung: 12.01.2005
(73) Patentinhaber: ROBERT BOSCH GMBH, 70442 Stuttgart (DE)
(72) Erfinder: GLAUNING, Rainer, 72631 Aichtal-Groetzingen (DE)
(86) Internationale Anmeldenummer: PCT/DE2003/000992
(87) Internationale Veröffentlichungsnummer: WO 2003/083961

(56) Entgegenhaltungen:
- EP-A- 1 191 616
- WO-A-01/03231
- WO-A-02/03484
- JP-A- 2000 058 016
- PATENT ABSTRACTS OF JAPAN vol. 1995, no. 05, 30. Juni 1995 (1995-06-30) & JP 07 045310 A (HONDA MOTOR CO LTD), 14. Februar 1995 (1995-02-14)
- PATENT ABSTRACTS OF JAPAN vol. 1999, no. 12, 29. Oktober 1999 (1999-10-29) & JP 11 204151 A (NISSAN MOTOR CO LTD), 30. Juli 1999 (1999-07-30)

## Beschreibung

### Stand der Technik

Die Erfindung geht aus von einem Energiespeichermodul, insbesondere in Form eines Akku-Packs für eine Handwerkzeugmaschine, gemäß dem Oberbegriff des Anspruchs 1.

Moderne Handwerkzeugmaschinen, wie beispielsweise Handbohrmaschinen oder Akku-Schrauber, werden oftmals durch Akku-Packs mit Strom versorgt, wobei die Akku-Packs aus mehreren Zellen bestehen, die elektrisch miteinander verbunden sind und beispielsweise durch eine Kunststoffummantelung zusammengehalten werden.

Beim Betrieb derartiger Akku-Packs entsteht jedoch sowohl während des Ladens als auch während des Entladens eine erhebliche Verlustwärme in den Zellen, was zu einer Erhöhung der Zellentemperatur und damit zu einer vorzeitigen Alterung der Zellen führt.

Darüber hinaus weist ein solcher Akku-Pack nach einem Entladevorgang aufgrund der dabei entstandenen Verlustwärme meist eine so hohe Temperatur auf, daß nicht sofort mit dem Aufladen begonnen werden kann. Vielmehr muß ein dafür vorgesehenes Ladegerät erst abwarten, bis die Temperatur des Akku-Packs wieder abgesunken ist, wodurch der Ladevorgang verzögert wird.

Darüber hinaus können die einzelnen Zellen eines solchen Akku-Packs im Betrieb erhebliche Temperaturunterschiede aufweisen, da die Verlustwärme von den außen liegenden Zellen relativ gut abgeführt wird, wohingegen sich in der Mitte des Akku-Packs meist ein Wärmestau bildet.

Bekannt ist weiterhin ein von der Firma Makita vertriebener Akku-Pack, der während des Ladevorgangs gekühlt wird, indem ein Kühlluftstrom durch den Akku-Pack geblasen wird. Nachteilig daran ist zum einen die Tatsache, daß die Kühlung nur während des Ladevorgangs erfolgt, wohingegen der Akku-Pack während des Entladevorgangs ungekühlt ist. Zum anderen kann das Innere dieses bekannten Akku-Packs durch den Kühlluftstrom verschmutzt werden.

Aus der WO 01/03231 A1 und der WO 02/03484 A1 ist jeweils ein Akku-Pack mit Akku-Zellen bekannt, bei dem mindestens einer Zelle zur Energiespeicherung, bei dem zur externen Wärmeabführung mindestens ein Kühlkörper aus einem wärmeleitfähigen Material vorgesehen ist und der Kühlkörper thermisch mit der Zelle verbunden ist und zur mechanischen Fixierung in einem Ladegerät oder in einem Elektrogerät eine Führung vorgesehen ist .

### Vorteile der Erfindung

Die Erfindung umfaßt die technische Lehre, ein Energiespeichermodul mit einem Kühlkörper vorzusehen, um die in den Zellen entstehende Wärme nach außen abzuführen, wobei der Kühlkörper aus einem wärmeleitfähigen Material besteht und thermisch mit den Zellen verbunden ist und zur mechanischen Fixierung in einem Ladegerät oder in einem Elektrogerät eine Führung vorgesehen ist. Es wird vorgeschlagen, daß der Kühlkörper im Bereich der Führung angeordnet ist.

Vorzugsweise weist der Kühlkörper eine große Oberfläche auf, um den Wärmeübergang von dem Kühlkörper auf die umgebende Luft zu erleichtern. Hierzu kann der Kühlkörper beispielsweise Kühlrippen, Kühlschlitze oder ähnliche Elemente aufweisen, welche die Oberfläche des Kühlkörpers vergrößern. Es ist jedoch auch möglich, daß die Oberfläche des Kühlkörpers zur Vergrößerung der effektiven Oberfläche strukturiert ist, was beispielsweise durch eine wellige Oberflächenform erreicht werden kann.

Als Material für den Kühlkörper eignen sich vorzugsweise Leichtmetalle, wie beispielsweise Aluminium, die bei geringem Gewicht eine gute Wärmeleitfähigkeit aufweisen.

Die thermische Verbindung des Kühlkörpers mit den Zellen kann beispielsweise durch einen direkten Berührungskontakt erfolgen, so daß der Wärmeübergang von den Zellen auf den Kühlkörper vorrangig durch Wärmeleitung erfolgt.

In der bevorzugten Ausführungsform der Erfindung ist hierzu jedoch mindestens ein Wärmeleitelement vorgesehen, das aus einem wärmeleitfähigen Material besteht, und die in den Zellen entstehende Wärme an den Kühlkörper weitergibt. Dies ist sinnvoll, da der Kühlkörper vorzugsweise an der Außenseite des Energiespeichermoduls angeordnet ist, während sich die Zellen teilweise auch im Inneren des Akku-Packs befinden, so daß ein direkter Berührungskontakt in der Regel nur zu den randnahen Zellen möglich ist.

Vorzugsweise weist das erfindungsgemäße Energiespeichermodul mindestens zwei Zellen auf, die durch ein Wärmeausgleichselement thermisch miteinander verbunden sind, wobei das Wärmeausgleichselement aus einem wärmeleitfähigen Material besteht.

Dieses Wärmeausgleichselement hat zum einen die Aufgabe, Temperaturunterschiede zwischen den einzelnen Zellen auszugleichen, um Temperaturspitzen innerhalb des Energiespeichermoduls zu verringern. Das Wärmeausgleichselement besteht deshalb aus einem Material mit einer guten Wärmeleitfähigkeit, wie beispielsweise Kupfer oder Aluminium.

Zum anderen dient das Wärmeausgleichselement vorzugsweise auch als Pufferelement, um zeitliche Schwankungen der Wärmeentwicklung auszugleichen. Dies ist insbesondere bei kurzzeitigen oder impulsartigen Belastungen des Energiespeichermoduls vorteilhaft, da die Belastungsdauer dabei möglicherweise zu kurz ist, um einen Abtransport der in den Zellen entstehenden Wärme nach außen zu ermöglichen. Das Wärmeausgleichselement ermöglicht demgegenüber eine lokale Kühlung am Ort der Wärmeerzeugung, indem Wärme von den Zellen auf das Wärmeausgleichselement übergeht, wodurch sich die Zellen entsprechend abkühlen. Vorzugsweise besteht das Wärmeausgleichselement deshalb aus einem Material mit einer großen spezifischen Wärmekapazität, um möglichst viel Wärme von den Zellen aufnehmen zu können.

In der bevorzugten Ausführungsform erfolgt die thermische Verbindung zwischen dem Wärmeausgleichselement und den Zellen durch einen direkten Berührungskontakt, indem die Zellen flächig an dem Wärmeausgleichselement anliegen.

Zur Verbesserung des Wärmeübergangs von den Zellen auf das Wärmeausgleichselement ist die Form des Wärmeausgleichselements vorzugsweise an die Formgebung der Zellen angepaßt, um eine möglichst große Kontaktfläche zwischen den Zellen und dem Wärmeausgleichselement zu erreichen.

Bei zylindrischen Zellen kann das Wärmeausgleichselement beispielsweise konkav geformte Aufnahmeflächen aufweisen, deren Krümmungsradius dem Radius der Zellen entspricht, so daß die Zellen mit ihrer Mantelfläche flächig an den Aufnahmeflächen anliegen. Hierbei kann das Wärmeausgleichselement in die Zwischenräume zwischen den benachbarten Zellen eingeschoben werden, so daß keine separate mechanische Fixierung des Wärmeausgleichselements erforderlich ist.

Zur Erreichung eines guten Wärmeübergangs von den Zellen auf das Wärmeausgleichselement kann das Wärmeausgleichselement auch aus einem nachgiebigen Material bestehen, das sich der Außenform der Zellen anpaßt und dadurch einen innigen Kontakt herstellt.

Darüber hinaus kann der Zwischenraum zwischen den Zellen und dem Wärmeausgleichselement mindestens teilweise mit einer wärmeleitfähigen Masse aufgefüllt werden, um den Wärmeübergang von den Zellen auf das Wärmeausgleichselement zu verbessern.

Vorzugsweise ist das Wärmeausgleichselement durch mindestens ein Wärmeleitelement mit dem Kühlkörper verbunden, so daß kein direkter Berührungskontakt zwischen dem Kühlkörper und dem Wärmeausgleichselement erforderlich ist.

In der bevorzugten Ausführungsform der Erfindung besteht das Wärmeleitelement aus einem nachgiebigen Material, so daß sich das Wärmeleitelement an die Raumgegebenheiten innerhalb des Akku-Packs anpassen kann.

Beispielsweise kann das Wärmeleitelement bandförmig oder kabelförmig sein, was hinsichtlich der Führung des Wärmeleitelements innerhalb des Akku-Packs einen großen konstruktiven Spielraum eröffnet.

Die Verbindung zwischen den Zellen, dem Wärmeausgleichselement, dem Wärmeleitelement und dem Kühlkörper erfolgt so, daß ein möglichst guter thermischer Übergang gewährleistet ist. Hierzu eignet sich beispielsweise eine Lötverbindung oder eine Schweißverbindung, jedoch sind auch lösbare Verbindungsarten möglich.

Darüber hinaus betrifft die Erfindung auch ein Elektrogerät mit einem derartigen Energiespeichermodul, wie beispielsweise ein Ladegerät oder eine Handwerkzeugmaschine, insbesondere eine Handbohrmaschine, einen Akku-Schrauber oder ein Schleifgerät. Das Elektrogerät kann hierbei für eine aktive Kühlung einen Lüfter aufweisen, der den Kühlkörper mit Umgebungsluft anströmt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Es zeigen:
- Fig. 1: eine Perspektivansicht eines erfindungsgemäßen Akku-Packs für eine Handwerkzeugmaschine im teilmontierten Zustand,
- Fig. 2: eine perspektivische Aufrißdarstellung des Akku-Packs aus Figur 1 im fertig montierten Zustand,
- Fig. 3: eine andere perspektivische Aufrißdarstellung des Akku-Packs aus Fig. 2 sowie
- Fig. 4: eine Perspektivansicht des Akku-Packs aus Figur 2.

### Beschreibung der Ausführungsbeispiele

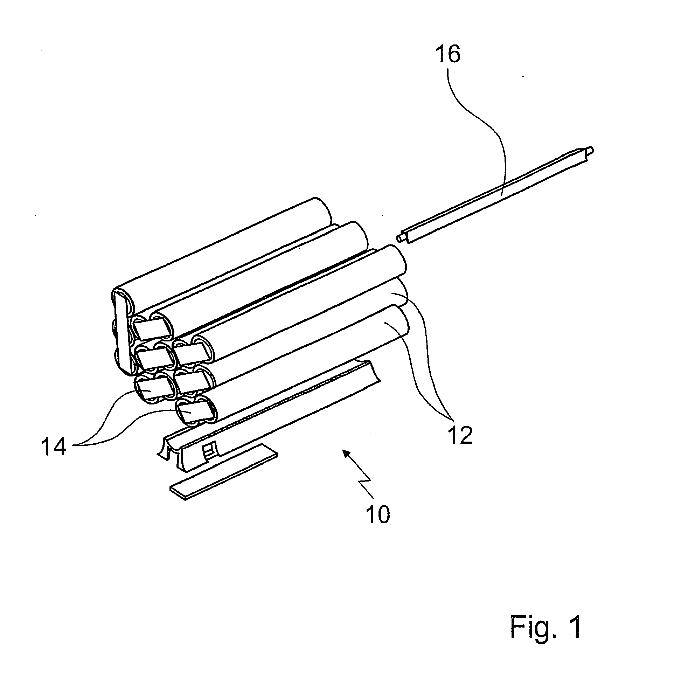

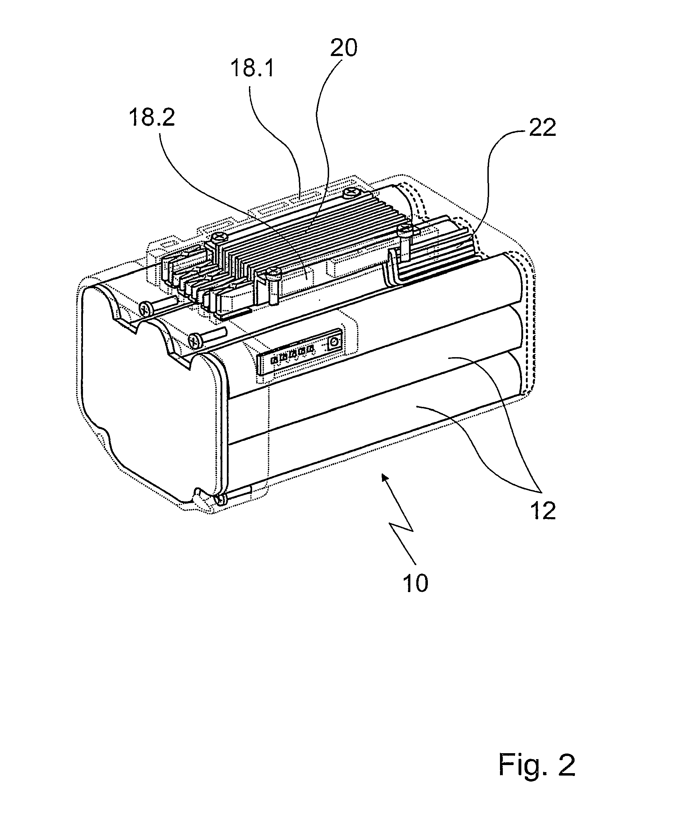

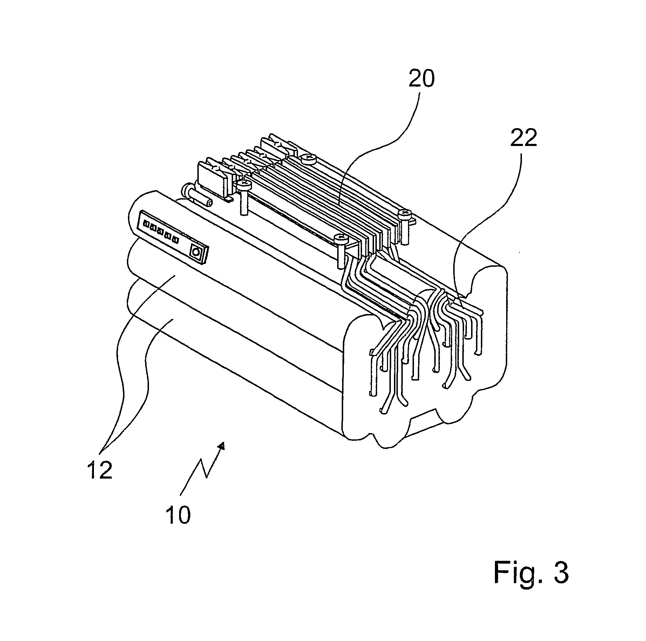

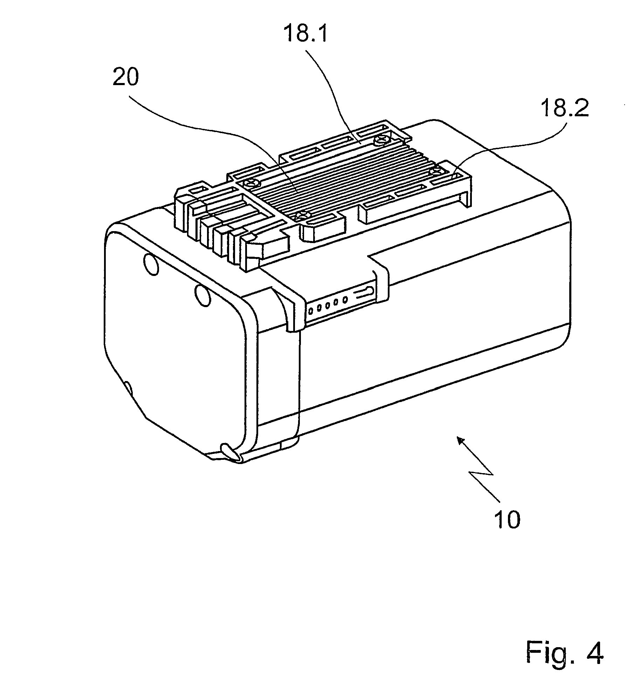

Die Perspektivansichten in den Figuren 1 bis 4 zeigen ein Energiespeichermodul in Form eines Akku-Packs 10 für eine Handwerkzeugmaschine, wie beispielsweise eine Handbohrmaschine, wobei in den Figuren 2 und 3 Aufrißdarstellungen wiedergegeben sind, um den inneren Aufbau des Akku-Packs 10 deutlich zu machen.

Der Akku-Pack 10 weist fünfzehn langgestreckte zylindrische Zellen 12 zur Speicherung elektrischer Energie auf, die jeweils durch einen Papier- oder Kunststoffmantel elektrisch isoliert sind. An ihren Stirnseiten weisen die Zellen 12 elektrische Anschlußkontakte auf, die durch Metallbleche 14 elektrisch zusammengeschaltet sind, um die gewünschte Ausgangsspannung und Kapazität des Akku-Packs 10 zu erreichen.

Die Zellen 12 sind hierbei zu einem platzsparenden Paket zusammengefügt, wobei jeweils drei benachbarte Zellen 12 unmittelbar aneinander anliegen. In den Zwischenraum zwischen den einzelnen Zellen 12 werden bei der Fertigung Profilstücke 16 aus Aluminium eingeschoben, wobei die Profilstücke 16 im montierten Zustand flächig an den benachbarten Zellen 12 anliegen, wodurch ein guter Wärmekontakt zwischen den Zellen 12 und den Profilstücken 16 entsteht. Der Querschnitt der Profilstücke 16 ist deshalb an den Zwischenraum zwischen den benachbarten Zellen 12 angepaßt, um eine möglichst große effektive Kontaktfläche zwischen den Zellen 12 und den Profilstücken 16 zu erreichen. In dem dargestellten Ausführungsbeispiel mit jeweils drei aneinander angrenzenden Zellen 12 weisen die Profilstücke 16 deshalb an ihrer Außenseite jeweils konkave Vertiefungen auf, die in Längsrichtung verlaufen und jeweils eine Zelle 12 aufnehmen.

Die Profilstücke 16 bilden hierbei Wärmeausgleichselemente, die Temperaturunterschiede zwischen den benachbarten Zellen 12 ausgleichen, indem Wärme von heißeren Zellen 12 über die Profilstücke 16 auf kältere Zellen 12 übergeht. Dadurch werden lokale Temperaturspitzen innerhalb des Akku-Packs 10 geglättet, was einer Überhitzung entgegenwirkt.

Darüber hinaus wirken die Profilstücke 16 auch als thermische Pufferelemente, die einen Teil der von den Zellen 12 erzeugten Wärme aufnehmen und dadurch die Temperatur der Zellen 12 absenken. Dies ist insbesondere bei einem kurzzeitigen Lade- oder Entladebetrieb vorteilhaft, da die Belastungsdauer dann möglicherweise nicht ausreicht, um die erzeugte Wärme nach außen abzuführen, so daß die Wärme möglichst nahe am Entstehungsort abgeführt werden muß. Die Verwendung von Aluminium für die Herstellung der Profilstücke 16 ist vorteilhaft, da Aluminium eine relativ große spezifische Wärmekapazität aufweist, so daß die Profilstücke 16 relativ viel Wärme von den Zellen 12 aufnehmen können, ohne sich übermäßig zu erhitzen.

Zur mechanischen Fixierung des Akku-Packs 10 in einer Handwerkzeugmaschine oder in einem Ladegerät weist der Akku-Pack 10 an seiner Oberseite eine Führung auf, die im wesentlichen aus zwei zueinander parallelen Führungsschienen 18.1, 18.2 besteht. Die beiden Führungsschienen 18.1, 18.2 greifen während des Betriebs in entsprechende Führungsschienen in dem Ladegerät bzw. der Handwerkzeugmaschine ein, wodurch der Akku-Pack 10 fixiert wird.

Zwischen den beiden Führungsschienen 18.1, 18.2 ist ein Kühlkörper 20 aus Aluminium angeordnet, um die von den Zellen 12 erzeugte Wärme an die Umgebungsluft abzugeben. Zur Verbesserung des Wärmeübergangs auf die Umgebungsluft weist der Kühlkörper 20 mehrere Kühlrippen auf, die die effektive Oberfläche des Kühlkörpers 20 vergrößern.

Darüber hinaus sind zwischen den beiden Führungsschienen 18.1, 18.2 auch die elektrischen Anschlußkontakte des Akku-Packs 10 angeordnet, so daß die Führung die elektrische, thermische und mechanische Kontaktierung des Akku-Packs 10 ermöglicht.

Die thermische Verbindung des Kühlkörpers 20 mit den einzelnen Zellen 12 erfolgt durch mehrere kabelförmige Wärmeleitelemente 22 aus einem wärmeleitfähigen, nachgiebigen Material, die den Kühlkörper 20 mit den einzelnen Profilstücken 16 verbinden, wie insbesondere aus Figur 3 ersichtlich ist. Hierbei ist jedem Profilstück 16 jeweils ein Wärmeleitelement 22 zugeordnet, so daß jedes Profilstück 16 getrennt mit dem Kühlkörper 20 verbunden ist. Die von den Zellen 12 erzeugte Wärme geht also zunächst auf die Profilstücke 16 über, die ihre Wärme dann über die Wärmeleitelemente 22 an den Kühlkörper 20 abgeben.

Die Nachgiebigkeit der Wärmeleitelemente 22 ermöglicht vorteilhaft einen großen konstruktiven Spielraum bei der Führung der Wärmeleitelemente 22 innerhalb des Akku-Packs 10, da kleine Zwischenräume genutzt werden können.

Die Verbindung der Wärmeleitelemente 22 mit den Profilstücken 16 erfolgt hierbei jeweils an der Stirnseite des Akku-Packs 10, indem die Wärmeleitelemente 22 an den Stirnseiten der Profilstücke 16 angelötet werden.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichen

- 10: Akku-Pack
- 12: Zellen
- 14: Metallblech
- 16: Profilstück
- 18.1,18.2: Führungsschienen
- 20: Kühlkörper
- 22: Wärmeleitelement

## Patentansprüche

1. Energiespeichermodul (10), insbesondere Akku-Pack zur Stromversorgung einer Handwerkzeugmaschine, mit mindestens einer Zelle (12) zur Energiespeicherung, bei dem zur externen Wärmeabführung mindestens ein Kühlkörper (20) aus einem wärmeleitfähigen Material vorgesehen ist und der Kühlkörper (20) thermisch mit der Zelle (12) verbunden ist und zur mechanischen Fixierung in einem Ladegerät oder in einem Elektrogerät eine Führung (18.1, 18.2) vorgesehen ist, **dadurch gekennzeichnet, daß** der Kühlkörper (20) im Bereich der Führung (18.1, 18.2) angeordnet ist.

2. Energiespeichermodul (10) nach Anspruch 1, **dadurch gekennzeichnet, daß** zur thermischen Verbindung des Kühlkörpers (20) mit der Zelle (12) mindestens ein Wärmeleitelement (22) aus einem wärmeleitfähigen Material vorgesehen ist.

3. Energiespeichermodul (10) nach Anspruch 1 und/oder Anspruch 2, **dadurch gekennzeichnet, daß** mindestens zwei Zellen (12) vorgesehen sind, die durch mindestens ein Wärmeausgleichselement (16) aus einem wärmeleitfähigen Material thermisch miteinander verbunden sind.

4. Energiespeichermodul (10) nach Anspruch 3, **dadurch gekennzeichnet, daß** das Wärmeausgleichselement (16) durch das Wärmeleitelement (22) thermisch mit dem Kühlkörper (20) verbunden ist.

5. Energiespeichermodul (10) nach Anspruch 3 und/oder Anspruch 4, **dadurch gekennzeichnet, daß** mindestens zwei Wärmeausgleichselemente (16) vorgesehen sind, die durch jeweils ein Wärmeleitelement (22) thermisch mit dem Kühlkörper (20) verbunden sind.

6. Energiespeichermodul (10) nach mindestens einem der vorhergehenden Ansprüche 2 bis 5, **dadurch gekennzeichnet, daß** das Wärmeleitelement (22) aus einem nachgiebigen Material besteht.

7. Energiespeichermodul (10) nach Anspruch 6, **dadurch gekennzeichnet, daß** das Wärmeleitelement (22) bandförmig oder kabelförmig ist.

8. Energiespeichermodul (10) nach mindestens einem der vorhergehenden Ansprüche, **dadurch gekennzeichnet, daß** der Kühlkörper (20) mindestens eine Kühlrippe aufweist.

9. Elektrogerät mit mindestens einem Energiespeichermodul (10) nach mindestens einem der vorhergehenden Ansprüche.

10. Elektrogerät nach Anspruch 9, **dadurch gekennzeichnet, daß** zum Anblasen des Kühlkörpers (20) mindestens ein Lüfter vorgesehen ist.

## Claims

1. Energy storage module (10), in particular accumulator pack for supplying power to a power tool, having at least one cell (12) for storing energy, in which energy storage module (10) at least one heat sink (20) composed of a thermally conductive material is provided for externally dissipating heat, and the heat sink (20) is thermally connected to the cell (12) and a guide means (18.1, 18.2) is provided for securing said energy storage module (10) mechanically in a charge device or in an electrical appliance, **characterized in that** the heat sink (20) is arranged in the region of the guide (18.1, 18.2).

2. Energy storage module (10) according to Claim 1, **characterized in that** at least one thermally conducting element (22) composed of a thermally conductive material is provided for thermally connecting the heat sink (20) to the cell (12) .

3. Energy storage module (10) according to Claim 1 and/or Claim 2, **characterized in that** at least two cells (12) are provided and are connected thermally to one another by means of at least one heat-equalizing element (16) composed of a thermally conductive material.

4. Energy storage module (10) according to Claim 3, **characterized in that** the thermally equalizing element (16) is thermally connected to the heat sink (20) by means of the thermally conducting element (22).

5. Energy storage module (10) according to Claim 3 and/or Claim 4, **characterized in that** at least two thermally equalizing elements (16) are provided and are thermally connected to the heat sink (20) by means of one thermally conducting element (22) each.

6. Energy storage module (10) according to at least one of the preceding Claims 2 to 5, **characterized in that** the thermally conducting element (22) is composed of a resilient material.

7. Energy storage module (10) according to Claim 6, **characterized in that** the thermally conducting element (22) is ribbon-shaped or cable-shaped.

8. Energy storage module (10) according to at least one of the preceding claims, **characterized in that** the heat sink (20) has at least one cooling rib.

9. Electrical appliance having at least one energy storage module (10) according to at least one of the preceding claims.

10. Electrical appliance according to Claim 9, **characterized in that** at least one fan is provided for blowing in the direction of the heat sink (20).

## Revendications

1. Module de stockage d'énergie (10), en particulier pack d'accus destiné à l'alimentation électrique d'une machine outil à main, comprenant au moins une cellule (12) destinée à l'accumulation d'énergie, au moins un corps de refroidissement (20) constitué d'un matériau avec une conductivité thermique prévu pour l'évacuation de chaleur externe, le corps de refroidissement (20) étant thermiquement relié à la cellule (12) et une glissière (18.1, 18.2) étant prévue pour être fixée mécaniquement dans un groupe de charge ou dans un appareil électrique,
**caractérisé en ce que**
le corps de refroidissement (20) est installé dans la zone de la glissière (18.1, 18.2).

2. Module de stockage d'énergie (10) selon la revendication 1,
**caractérisé en ce qu'**
au moins un élément thermoconducteur (22) constitué d'un matériau avec une conductivité thermique est prévu pour la liaison thermique du corps de refroidissement (20) à la cellule (12).

3. Module de stockage d'énergie (10) selon la revendication 1 et/ou la revendication 2,
**caractérisé par**
au moins deux cellules (12) thermiquement reliées entre elles par au moins un élément d'équilibre calorifique (16) constitué d'un matériau avec une conductivité thermique.

4. Module de stockage d'énergie (10) selon la revendication 3,
**caractérisé en ce que**
l'élément d'équilibre calorifique (16) est thermiquement relié au corps de refroidissement (20) par l'élément thermoconducteur (22).

5. Module de stockage d'énergie (10) selon la revendication 3 et/ou la revendication 4,
**caractérisé par**
au moins deux éléments d'équilibre calorifique (16) chacun thermiquement relié au corps de refroidissement (20) par un élément thermoconducteur (22).

6. Module de stockage d'énergie (10) selon au moins l'une quelconque des revendications précédentes 2 à 5,
**caractérisé en ce que**
l'élément thermoconducteur (22) se compose d'un matériau flexible.

7. Module de stockage d'énergie (10) selon la revendication 6,
**caractérisé en ce que**
l'élément thermoconducteur (22) est en forme de bande ou en forme de câble.

8. Module de stockage d'énergie (10) selon au moins l'une quelconque des revendications précédentes,
**caractérisé en ce que**
le corps de refroidissement (20) présente au moins une ailette de refroidissement.

9. Appareil électrique avec au moins un module de stockage d'énergie (10) selon au moins l'une quelconque des revendications précédentes.

10. Appareil électrique selon la revendication 9,
**caractérisé en ce qu'**
au moins un ventilateur est prévu pour souffler dans la direction du corps de refroidissement (20).
